# FASCICULE DE BREVET EUROPEEN

(11) **EP 3 170 688 B1**
(45) Date de publication et mention de la délivrance du brevet: **13.09.2023**
(21) Numéro de dépôt: 16198587.4
(22) Date de dépôt: 14.11.2016
(51) Int. Cl.: B60H 1/00, H02K 7/20, B60H 1/32, H02K 1/276

(54) **ENSEMBLE COMPORTANT UN GENERATEUR ET DES MOTEURS ELECTRIQUES, POUR UN SYSTEME DE CLIMATISATION OU DE REFRIGERATION DE VEHICULE**
EINHEIT BESTEHEND AUS EINEM GENERATOR UND ELEKTROMOTOREN FÜR EIN KLIMATISIERUNGS- ODER KÜHLSYSTEM EINES FAHRZEUGS
ASSEMBLY COMPRISING A GENERATOR AND ELECTRIC MOTORS, FOR AN AIR-CONDITIONING OR REFRIGERATION SYSTEM OF A VEHICLE

(30) Priorité: 23.11.2015 FR 1561216
(43) Date de publication de la demande: 24.05.2017
(73) Titulaire: Moteurs Leroy-Somer, 16915 Angouleme (FR)
(72) Inventeur: GIRAUD, Régis, 16000 ANGOULEME (FR)
(74) Mandataire: Cabinet Nony

(56) Documents cités:
- EP-A1- 0 715 979
- EP-B1- 0 715 979
- WO-A1-2014/013457
- WO-A1-2014/013458
- WO-A1-2015/019625
- US-A- 5 838 085

## Description

La présente invention concerne la production d'électricité à partir d'un ensemble comportant un moteur thermique et un dispositif de production d'électricité pour l'alimentation d'un ou plusieurs moteurs électriques, notamment pour un système de réfrigération ou de climatisation d'un véhicule.

Selon les régions du monde, il est parfois nécessaire de pouvoir alimenter l'ensemble du système de réfrigération ou de climatisation depuis un réseau électrique disponible, par exemple dans le cas où le véhicule est à l'arrêt. Cette nécessité peut obliger à exclure de l'ensemble certains éléments comme les compresseurs purement mécaniques, qui sont majoritairement utilisés à ce jour, dans la mesure où pour être alimentés par un réseau électrique ils doivent être entraînés par un moteur électrique incorporé, rendant cette technologie, fort efficace par ailleurs, non compétitive face aux compresseurs intégrés ou hermétiques. Les documents WO 2014/013457 A1 et WO 2014/013458 A1 présentent des modules distincts pour l'entraînement du compresseur et le générateur.

Il existe donc un besoin pour permettre d'utiliser dans de tels ensembles un compresseur purement mécanique, notamment non hermétique.

Il existe plus généralement un besoin pour simplifier et faciliter l'entraînement du système de réfrigération ou de climatisation, réduire le coût du dispositif de production d'électricité et augmenter l'efficacité du système pour réduire sa consommation de carburant.

L'invention vise notamment à répondre à ce besoin et a ainsi pour objet un ensemble comportant :
- un compresseur destiné à être entraîné par un moteur thermique, notamment un moteur thermique diesel,
- un moteur électrique d'appoint pour l'entraînement du compresseur lorsque ce dernier n'est pas ou ne peut pas être entraîné par le moteur thermique,
- un générateur à aimants permanents ayant un arbre qui est entraîné en rotation par le moteur thermique, le générateur et le moteur électrique d'appoint étant disposés sur cet arbre,
- un ou plusieurs moteurs électriques de condenseurs et/ou d'évaporateurs d'un système de climatisation ou de réfrigération de véhicule, le générateur alimentant directement le ou les moteurs électriques, la tension d'alimentation du ou des moteurs électriques étant la tension de sortie du générateur,
l'ensemble pouvant comporter en outre un dispositif de bascule de l'alimentation du ou des moteurs électriques de condenseurs et/ou d'évaporateurs du système de climatisation ou de réfrigération, permettant de passer d'une alimentation par le générateur à une alimentation par un réseau électrique externe, le dispositif de bascule comportant un ou plusieurs interrupteurs permettant de commander l'alimentation du ou des moteurs électriques à partir du réseau électrique.

Le générateur et le moteur électrique sont disposés sur un même arbre mécanique. On bénéficie ainsi d'un ensemble plus compact et plus efficace, sans la nécessité d'une transmission mécanique.

Le générateur et le moteur électrique d'appoint peuvent être contenus dans un carter commun. On peut ainsi monter le générateur et le moteur électrique d'appoint dans un véhicule existant, en lieu et place d'un moteur d'appoint préexistant.

Le carter peut être un carter comportant des ouvertures, afin de favoriser sa ventilation. Il peut comporter un système de refroidissement intégré, par exemple un système de refroidissement par air. Il peut comporter deux ventilateurs disposés chacun de part et d'autre du générateur et du moteur, à chacune des extrémités de l'ensemble. L'air peut dans ce cas rentrer par les extrémités et sortir par le milieu, par des ouvertures ménagées dans le carter entre le générateur et le moteur électrique d'appoint. En variante encore, le carter peut être refroidi par un liquide, par exemple de l'eau. Le carter utilisé peut être un carter d'étanchéité IP 23, ou IP 21 ou en variante un carter d'étanchéité IP 55 ou IP 54 ou IP 56, voire IP 65.

L'invention permet d'améliorer le rendement de l'ensemble, ce qui peut est particulièrement avantageux pour des véhicules dont le moteur thermique doit avoir une puissance limitée. Cela peut être imposé par la législation, dans un objectif de limitation de la pollution. L'alimentation directe du ou des moteurs électriques par le générateur permet d'améliorer l'efficacité et le rendement de l'ensemble, par exemple par rapport à un système à liaison par poulie-courroie.

L'ensemble peut comporter ledit moteur thermique, notamment un moteur thermique diesel, pour l'entraînement du compresseur. Le moteur thermique et le ou les moteurs électriques peuvent appartenir à un système de réfrigération ou de climatisation d'un véhicule.

L'ensemble ainsi constitué permet les deux fonctionnements suivants pour un véhicule équipé dudit ensemble. Sur la route, le moteur thermique entraîne le compresseur directement ou via un accouplement, et entraîne le générateur, lequel fournit de l'électricité aux moteurs électriques des condenseurs et/ou évaporateurs. A l'arrêt, autrement appelé mode *stand-by,* c'est le moteur électrique d'appoint qui entraîne le compresseur réfrigérant alors que les moteurs de condenseurs et d'évaporateurs peuvent être alimentés par le réseau électrique ou par le générateur.

Lorsque le moteur thermique est à l'arrêt, les moteurs électriques de condenseur et/ou d'évaporateur peuvent être alimentés depuis le réseau électrique externe. Dans ce cas, le générateur ne débite pas de courant. En outre, lorsque le véhicule est à quai et que le moteur thermique est à l'arrêt, le moteur électrique d'appoint peut être en fonctionnement pour alimenter le compresseur.

En variante ou additionnellement, lorsque le moteur thermique est à l'arrêt, les moteurs électriques de condenseur et/ou d'évaporateur peuvent être alimentés directement par le générateur, et le compresseur être entraîné par le moteur électrique d'appoint
Le moteur électrique d'appoint peut alimenter à la fois le compresseur et le générateur, lequel alimente le ou les moteurs électriques. Un avantage d'une telle configuration est que le câblage en est simplifié. Ce fonctionnement peut notamment avoir lieu lorsque le moteur thermique est à l'arrêt, notamment lorsqu'un véhicule comportant l'ensemble est à quai.

Le compresseur est de préférence à entraînement mécanique, notamment à pistons. Un compresseur mécanique à pistons peut être plus efficace qu'un compresseur rotatif, hermétique, à vis ou « scroll ». L'entraînement peut se faire par poulie-courroie. L'ensemble peut être dépourvu d'un compresseur entraîné par un moteur électrique, en mode de fonctionnement sur route à tout le moins.

Le moteur électrique d'appoint peut alimenter un système de chauffage d'appoint, par exemple un système de chauffage et/ou de dégivrage d'un compartiment d'un véhicule. Il fonctionne alors en générateur, comme source d'énergie non régulée ni contrôlée. Ce fonctionnement peut notamment avoir lieu lorsque le moteur thermique est en fonctionnement, notamment lorsqu'un véhicule comportant l'ensemble est sur route, c'est-à-dire que le moteur thermique est en fonctionnement et alimente le compresseur.

En variante, lorsque le véhicule est sur route et que le moteur thermique est en fonctionnement, le moteur électrique d'appoint peut être à l'arrêt.

Le moteur électrique d'appoint peut comporter un rotor à quatre pôles. Il peut s'agir d'un moteur asynchrone. Le moteur peut être constitué par une machine à induction à cage d'écureuil.

Le moteur thermique peut être un moteur diesel. Le moteur thermique et le ou les moteurs électriques peuvent appartenir à un système de réfrigération ou de climatisation d'un véhicule. Le moteur thermique peut être différent du moteur servant à la propulsion du véhicule.

Le moteur thermique peut entraîner l'arbre du générateur par un système poulie-courroie. Un tel entraînement par poulie-courroie permet l'ajustement de la fréquence de sortie du générateur à la vitesse du moteur thermique afin de permettre l'utilisation de moteurs électriques de ventilateurs utilisables sur le réseau directement sans dégradation des performances.

Le générateur peut être à aimants permanents. Le rotor du générateur peut comporter des aimants permanents, étant alors par exemple un rotor à concentration de flux ou à aimants enterrés. Le générateur peut comporter un rotor à 4 pôles. Le diamètre extérieur du stator est par exemple de l'ordre de 200 mm.

Les stators du générateur et du moteur électrique d'appoint peuvent être identiques, notamment en taille et/ou en structure.

L'ensemble peut comporter un dispositif de bascule de l'alimentation du ou des moteurs électriques de condenseurs et/ou d'évaporateurs permettant de passer d'une alimentation par le générateur à une alimentation par un réseau électrique. Dans ce cas, le ou les moteurs sont reliés directement au réseau et le générateur est alors isolé.

Le dispositif de bascule peut être configuré pour ne pouvoir s'enclencher qu'à l'arrêt du véhicule. Ce dispositif de bascule peut comporter un ou plusieurs interrupteurs permettant de commander l'alimentation du ou des moteurs électriques de condenseurs et/ou d'évaporateurs à partir du réseau électrique. Le ou chaque interrupteur peut comporter un ou plusieurs composants électroniques. Le ou chaque interrupteur peut être réalisé par tout moyen adapté et par exemple à l'aide d'un ou plusieurs interrupteurs électromécaniques ou à semi-conducteurs, par exemple à contacteur(s), relais, thyristor(s), triac(s), IGBT, MOSFET ou transistor(s) bipolaire(s).

Le ou les moteurs de condenseurs et/ou d'évaporateurs peuvent fonctionner sur un réseau électrique externe tel qu'un réseau à 400V et 50Hz. Ils peuvent aussi fonctionner avec un réseau électrique à 460V et 60Hz. Ainsi, ces moteurs peuvent fonctionner sur les réseaux électriques du monde entier, pouvant être adaptés quel que soit le lieu d'utilisation et les caractéristiques du réseau électrique local.

Le ou les moteurs électriques peuvent servir chacun à l'entraînement d'un ventilateur et être des moteurs de condenseur et/ou d'évaporateur.

Chaque moteur de condenseurs et/ou d'évaporateurs est selon l'invention directement relié au générateur, sans dispositif électronique intermédiaire tel qu'un régulateur de tension ou onduleur, ce qui permet de diminuer le coût de l'ensemble. L'ensemble selon l'invention peut ainsi être dépourvu d'onduleur. On ne passe pas par un bus continu pour alimenter ledit moteur.

En outre, l'absence de tout entraînement mécanique du ou des ventilateurs de condenseurs et/ou d'évaporateurs permet d'augmenter l'efficacité énergétique de l'ensemble.

L'ensemble peut comporter un unique condenseur, ou en variante plusieurs condenseurs. L'ensemble comporte par exemple deux condenseurs. L'ensemble peut comporter un unique évaporateur, ou en variante plusieurs évaporateurs. L'ensemble peut comporter par exemple deux évaporateurs, ou plus.

Le ou les moteurs de condenseurs et/ou d'évaporateurs peuvent être des moteurs asynchrones. Ils peuvent être triphasés. Ils peuvent être des moteurs mono- ou bi-vitesse, ce qui peut permettre de conserver des performances aérauliques proches quelle que soit la vitesse du moteur thermique. On peut ainsi limiter la puissance absorbée en cas d'augmentation de la vitesse du moteur thermique. Les vitesses de rotation du moteur thermique sont par exemple les suivantes : 1600 rpm et 2200 rpm.

L'un ou au moins l'un des moteurs de condenseurs et/ou d'évaporateurs peut comporter un rotor à quatre pôles, ce qui permet un fonctionnement à basse vitesse avec une faible puissance consommée. L'un ou au moins l'un des moteurs de condenseurs et/ou d'évaporateurs peut, en variante, comporter une autre polarité, tel que par exemple 2, 6 ou 8 pôles.

Le ou les moteurs de condenseurs et/ou d'évaporateurs peuvent comporter un ventilateur à chacune des extrémités libres de leur arbre.

L'ensemble peut encore comporter un compresseur entraîné mécaniquement par le moteur thermique. L'entraînement peut se faire par poulie-courroie.

L'ensemble peut être dépourvu de batteries.

L'invention a encore pour objet un procédé de fonctionnement d'un ensemble tel que décrit ci-dessus, dans lequel soit (i) le compresseur et le générateur sont entraînés par le moteur thermique, notamment lorsqu'un véhicule portant l'ensemble est sur route, le générateur pouvant alors fournir de l'électricité aux moteurs électriques des condenseurs et/ou évaporateurs, soit (ii) le compresseur est entraîné par le moteur électrique d'appoint, notamment lorsqu'un véhicule portant l'ensemble est à l'arrêt, les moteurs de condenseurs et d'évaporateurs pouvant alors être alimentés par un réseau électrique externe ou par le générateur, le générateur pouvant également être entraîné par le moteur électrique d'appoint.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique un ensemble, embarqué ou non, équipé d'un dispositif de production d'électricité réalisé conformément à l'invention,
- les figures 2 et 3 sont des vues analogues à la figure 1 de variantes de réalisation,
- les figures 4a et 4b sont des vues schématiques, en coupe longitudinale, d'un générateur et d'un moteur électrique d'appoint utilisables dans l'invention,
- la figure 4c est une section transversale, schématique et partielle, du rotor du générateur de la figure 4b,
- les figures 5a, 5b et 5c sont des vues respectivement en perspective et selon les flèches IV et V d'un carter utilisable dans l'invention,
- la figure 6a est une section transversale, schématique et partielle, d'une variante de réalisation de rotor du générateur,
- la figure 6b est une vue en perspective, schématique et partielle, du rotor d'une variante de réalisation de générateur,
- les figures 7a à 7c sont des vues en perspective ou de côté, schématiques et partielles, de variantes de réalisation de carter selon l'invention, et
- les figures 8 et 9 sont des vues en perspective, schématiques et partielles, respectivement des moteurs de condenseur et d'évaporateur conformes à l'invention.

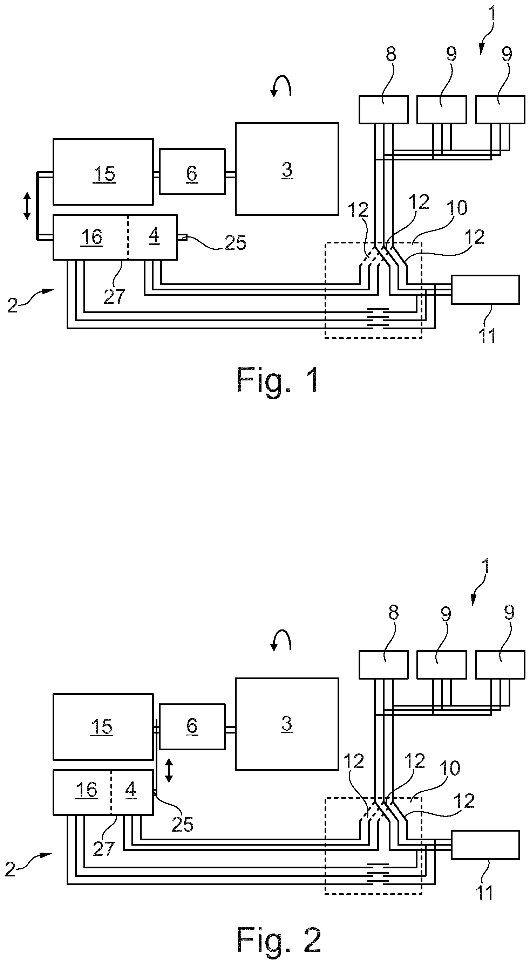

On a représenté à la figure 1 un ensemble 1 comportant d'une part un moteur thermique 3 et d'autre part un dispositif de production d'électricité 2 ayant un générateur 4 dont l'arbre 25 peut être entraîné en rotation par le moteur thermique 3.

L'ensemble 1 est par exemple embarqué sur un véhicule. Dans l'exemple décrit, le moteur thermique 3 est un moteur diesel.

L'ensemble comporte en outre des moteurs électriques d'un système de climatisation ou de réfrigération du véhicule, alimentés par le dispositif de production d'électricité 2. Dans l'exemple décrit, l'ensemble comporte un moteur 8 de condenseur et deux moteurs 9 d'évaporateur. Leur nombre pourrait bien entendu être différent sans que l'on sorte du cadre de la présente invention.

Le dispositif de production d'électricité 2 est configuré pour que le générateur alimente directement les moteurs électriques, c'est-à-dire que la tension d'alimentation des moteurs électriques est la tension de sortie du générateur 4.

Dans l'exemple décrit, l'ensemble comporte en outre un dispositif de bascule 10 de l'alimentation du ou des moteurs électriques des moteurs des condenseurs et de l'évaporateur, permettant de passer d'une alimentation par le générateur à une alimentation par le réseau électrique externe 11. Le dispositif de bascule 10 comporte des interrupteurs 12 permettant de commander l'alimentation des moteurs électriques à partir du réseau électrique 11.

L'ensemble comporte un compresseur 15 entraîné par le moteur thermique 3 par l'intermédiaire d'un accouplement 6. L'entraînement peut se faire par poulie-courroie. L'ensemble est ainsi dépourvu de compresseur entraîné électriquement.

L'ensemble comporte également un moteur électrique d'appoint 16 pour l'entraînement du compresseur 15 lorsque ce dernier n'est pas ou ne peut pas être entraîné par le moteur thermique. L'entraînement peut se faire par poulie-courroie.

Le moteur électrique d'appoint 16 est disposé sur le même arbre 25 que le générateur, de sorte que le moteur d'appoint et le générateur peuvent être contenus dans un carter commun 27, comme cela sera explicité plus loin.

Ce moteur électrique d'appoint 16 peut être alimenté à partir du réseau électrique 11. Malgré la présence du moteur électrique d'appoint 16, l'ensemble est dépourvu de compresseur entraîné électriquement en mode de fonctionnement sur route de l'ensemble.

Dans la variante de réalisation illustrée à la figure 1, les moteurs électriques de condenseur 8 et d'évaporateur 9 sont alimentés depuis le réseau électrique externe 11 lorsque le moteur thermique est à l'arrêt, et le compresseur est entraîné par le moteur électrique d'appoint 16.

Dans la variante de réalisation illustrée à la figure 1, le générateur 4 est entraîné par le moteur thermique 3 par l'intermédiaire d'une liaison mécanique passant par l'accouplement 6, le compresseur 15 et l'arbre 25.

Dans une variante de réalisation illustrée à la figure 2, le générateur 4 est entraîné par le moteur thermique 3 par l'intermédiaire d'une liaison mécanique directe, ne passant pas par le compresseur 15.

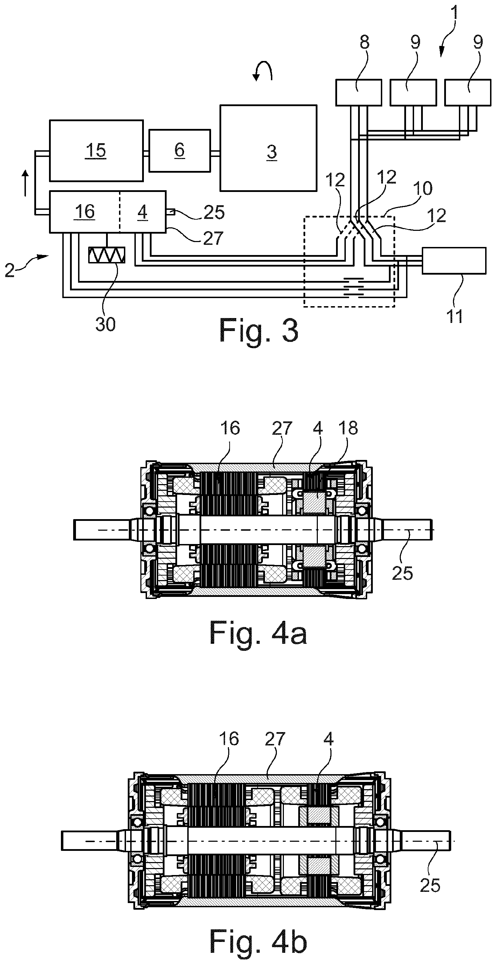

Dans une autre variante encore, illustrée à la figure 3, le moteur électrique d'appoint 16 utilisé en générateur peut alimenter un système de chauffage d'appoint 30, par exemple un système de chauffage et/ou de dégivrage d'un compartiment du véhicule, notamment lorsque le moteur thermique 3 est en marche.

Des exemples de réalisation du générateur 4 et du moteur électrique d'appoint 16 dans un carter commun 27 ont été illustrés en détails aux figures 4a, 4b, 5a à 5c et 7a à 7c.

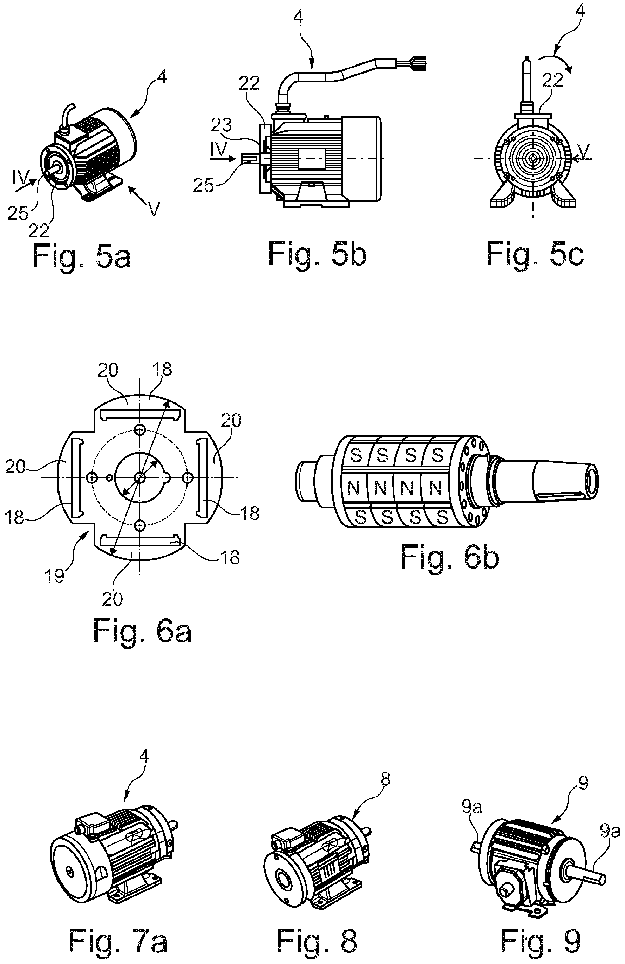

Le générateur 4 peut comporter un stator bobiné avec un bobinage distribué. Le rotor peut être à aimants permanents, comme illustré sur la figure 4a, ou bobiné. Il comporte dans l'exemple décrit un rotor 19 à aimants permanents 18 enterrés sous la surface des pôles 20, comme illustré sur la figure 6a. Le rotor illustré comporte quatre pôles 20. Dans une autre variante illustrée à la figure 6b, les aimants sont disposés en surface.

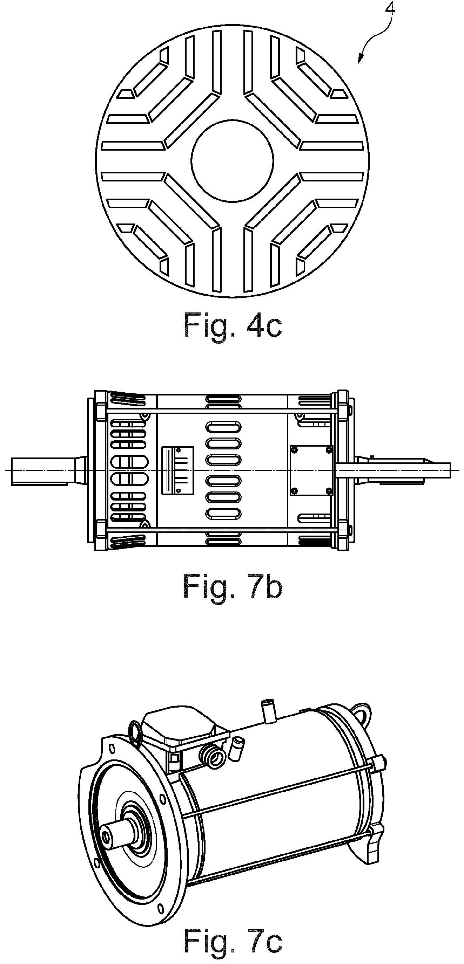

Dans la variante de réalisation illustrée à la figure 4b, le générateur 4 comporte un stator à bobinage distribué et un rotor conçu pour minimiser la quantité nécessaire d'aimants, comme illustré sur la figure 4c. Les aimants peuvent être de type ferrite ou terres rares (par exemple NeFeB). Le rotor illustré comporte 4 pôles mais pourrait en comporter 6 ou 8. Dans ces exemples, le carter 27 illustré est un carter avec deux bouts d'arbre 25, étant de classe IP 23.

Dans l'exemple de réalisation illustré aux figures 5a à 5c, le carter comporte un seul bout d'arbre 25, étant de classe IP 55. En outre, le générateur comporte une bride 22 permettant le démontage d'un roulement 23 disposé à l'avant du générateur.

Par ailleurs, le moteur thermique 3 entraîne l'arbre 25 du générateur 4 par poulie-courroie, ce qui permet l'ajustement de la fréquence de sortie du générateur à la vitesse du moteur thermique. Le moteur thermique 3 peut entraîner le générateur 4 à une vitesse variable. Par exemple, lorsque la charge du générateur est faible, la vitesse de rotation du moteur thermique 3 est relativement basse et lorsque la charge du générateur 3 augmente, la vitesse du moteur thermique 3 peut être augmentée.

On a illustré à la figure 7a un exemple de réalisation dans lequel le générateur 4 comporte un stator à bobinage réparti et un rotor comportant des aimants permanents enterrés et quatre pôles. Ce générateur a par exemple une puissance de 3,5kVA à une vitesse de fonctionnement de 1800 rpm.

Le générateur pourrait comporter 8 ou 6 pôles sans que l'on ne sorte du cadre de la présente invention.

Le carter 27 peut être refroidi à l'air, comme illustré sur la figure 7b, ou à l'eau, comme illustré sur la figure 7c.

On a illustré à la figure 8 un exemple de réalisation de moteur 8 du condenseur. Le moteur 8 comporte dans cet exemple un rotor à quatre pôles. Il pourrait, en variante, comporter 6 pôles et être à deux vitesses.

On a illustré à la figure 9 un exemple de réalisation de moteur 9 de l'évaporateur. L'évaporateur comporte par exemple un ventilateur à chacune des extrémités libres 9a de son arbre.

## Revendications

1. Ensemble (1) comportant un générateur et des moteurs électriques, pour un système de climatisation ou de réfrigération de véhicule, comportant :
- un compresseur (15) destiné à être entraîné par un moteur thermique (3),
- un moteur électrique d'appoint (16) pour l'entraînement du compresseur (15) lorsque ce dernier n'est pas ou ne peut pas être entraîné par le moteur thermique,
- un générateur (4) à aimants permanents ayant un arbre (25) qui peut être entraîné en rotation par le moteur thermique (3),
- un ou plusieurs moteurs électriques de condenseurs et/ou d'évaporateurs (8, 9) d'un système de climatisation ou de réfrigération de véhicule, le générateur alimentant directement le ou les moteurs électriques (8, 9), la tension d'alimentation du ou des moteurs électriques étant la tension de sortie du générateur,
- un dispositif de bascule (10) de l'alimentation du ou des moteurs électriques (8, 9) de condenseurs et/ou d'évaporateurs du système de climatisation ou de réfrigération, permettant de passer d'une alimentation par le générateur (4) à une alimentation par un réseau électrique externe (11), le dispositif de bascule (10) comportant un ou plusieurs interrupteurs (12) permettant de commander l'alimentation du ou des moteurs électriques à partir du réseau électrique,
**caractérisé en ce que**
le générateur (4) et le moteur électrique d'appoint (16) étant disposés sur cet arbre (25).

2. Ensemble selon la revendication précédente, le moteur thermique (3) et le ou les moteurs électriques (8, 9) appartenant à un système de réfrigération ou de climatisation d'un véhicule.

3. Ensemble selon l'une quelconque des revendications précédentes, dans lequel le générateur (4) et le moteur électrique d'appoint (16) sont contenus dans un carter commun (27).

4. Ensemble selon l'une quelconque des revendications précédentes, dans lequel le dispositif de bascule (10) est configuré pour que, lorsque le moteur thermique est à l'arrêt, les moteurs électriques de condenseur et/ou d'évaporateur (8, 9) sont alimentés depuis le réseau électrique externe (11).

5. Ensemble selon l'une quelconque des revendications précédentes, dans lequel le dispositif de bascule (10) est configuré pour que, lorsque le moteur thermique est à l'arrêt, les moteurs électriques de condenseur et/ou d'évaporateur (8, 9) sont alimentés directement par le générateur, et le compresseur est entraîné par le moteur électrique d'appoint (16).

6. Ensemble selon l'une quelconque des revendications précédentes, dans lequel le dispositif de bascule (10) est configuré pour que, lorsque le moteur thermique est à l'arrêt, le moteur électrique d'appoint alimente à la fois le compresseur et le générateur, lequel alimente le ou les moteurs électriques (8,9).

7. Ensemble selon l'une quelconque des revendications précédentes, dans lequel le compresseur (15) est à entraînement mécanique, notamment à pistons.

8. Ensemble selon l'une quelconque des revendications précédentes, dans lequel le moteur électrique d'appoint alimente un système de chauffage d'appoint (30), par exemple un système de chauffage et/ou de dégivrage d'un compartiment d'un véhicule, notamment lorsque le moteur thermique est en marche.

9. Ensemble selon l'une quelconque des revendications précédentes, dans lequel le moteur électrique d'appoint (16) comporte un rotor à quatre pôles.

10. Ensemble selon la revendication précédente, dans lequel le ou les moteurs électriques (8,9) servent chacun à l'entraînement d'un ventilateur et sont des moteurs de condenseur (8) et/ou d'évaporateur (9).

11. Ensemble selon l'une quelconque des revendications précédentes, dans lequel l'un ou au moins l'un des moteurs électriques (8) appartient à un condenseur, ledit moteur comportant un rotor à quatre pôles.

12. Ensemble selon l'une quelconque des revendications précédentes, dans lequel l'un ou au moins l'un des moteurs électriques (9) appartient à un évaporateur.

13. Procédé de fonctionnement d'un ensemble selon l'une quelconque des revendications précédentes, dans lequel soit (i) le compresseur et le générateur sont entraînés par le moteur thermique, notamment lorsqu'un véhicule portant l'ensemble est sur route, le générateur pouvant alors fournir de l'électricité aux moteurs électriques des condenseurs et/ou évaporateurs, soit (ii) le compresseur est entraîné par le moteur électrique d'appoint, notamment lorsqu'un véhicule portant l'ensemble est à l'arrêt, les moteurs de condenseurs et d'évaporateurs pouvant alors être alimentés par un réseau électrique externe ou par le générateur, le générateur pouvant également être entraîné par le moteur électrique d'appoint.

## Patentansprüche

1. Einheit (1), die einen Generator und Elektromotoren aufweist, für ein Klimatisierungs- oder Kühlsystem eines Fahrzeugs, die aufweist:
- einen Verdichter (15), der dazu bestimmt ist, von einem Verbrennungsmotor (3) angetrieben zu werden,
- einen Zusatzelektromotor (16) für den Antrieb des Verdichters (15), wenn letzterer nicht vom Verbrennungsmotor angetrieben wird oder angetrieben werden kann,
- einen Generator (4) mit Dauermagneten, der eine Welle (25) hat, die vom Verbrennungsmotor (3) in Drehung versetzt werden kann,
- einen oder mehrere Elektromotoren von Kondensatoren und/oder Verdampfern (8, 9) eines Klimatisierungs- oder Kühlsystems eines Fahrzeugs, wobei der Generator den oder die Elektromotoren (8, 9) direkt speist, wobei die Speisespannung des oder der Elektromotoren die Ausgangsspannung des Generators ist,
- eine Kippvorrichtung (10) der Speisung des oder der Elektromotoren (8, 9) von Kondensatoren und/oder Verdampfern des Klimatisierungs- oder Kühlsystems, die es ermöglicht, von einer Speisung durch den Generator (4) zu einer Speisung durch ein externes Stromnetz (11) überzugehen, wobei die Kippvorrichtung (10) einen oder mehrere Schalter (12) aufweist, die es ermöglichen, die Speisung des oder der Elektromotoren ausgehend vom Stromnetz zu steuern,
**dadurch gekennzeichnet, dass** der Generator (4) und der Zusatzelektromotor (16) auf dieser Welle (25) angeordnet sind.

2. Einheit nach dem vorhergehenden Anspruch, wobei der Verbrennungsmotor (3) und der oder die Elektromotoren (8, 9) zu einem Kühl- oder Klimatisierungssystem eines Fahrzeugs gehören.

3. Einheit nach einem der vorhergehenden Ansprüche, wobei der Generator (4) und der Zusatzelektromotor (16) in einem gemeinsamen Gehäuse (27) enthalten sind.

4. Einheit nach einem der vorhergehenden Ansprüche, wobei die Kippvorrichtung (10) so konfiguriert ist, dass, wenn der Verbrennungsmotor abgestellt ist, die Elektromotoren von Kondensator und/oder Verdampfer (8, 9) vom externen Stromnetz (11) gespeist werden.

5. Einheit nach einem der vorhergehenden Ansprüche, wobei die Kippvorrichtung (10) so konfiguriert ist, dass, wenn der Verbrennungsmotor abgestellt ist, die Elektromotoren von Kondensator und/oder Verdampfer (8, 9) direkt vom Generator gespeist werden, und der Verdichter vom Zusatzelektromotor (16) angetrieben wird.

6. Einheit nach einem der vorhergehenden Ansprüche, wobei die Kippvorrichtung (10) so konfiguriert ist, dass, wenn der Verbrennungsmotor abgestellt ist, der Zusatzelektromotor sowohl den Verdichter als auch den Generator speist, der den oder die Elektromotoren (8, 9) speist.

7. Einheit nach einem der vorhergehenden Ansprüche, wobei der Verdichter (15) einen mechanischen Antrieb hat, insbesondere mit Kolben.

8. Einheit nach einem der vorhergehenden Ansprüche, wobei der Zusatzelektromotor ein Zusatzheizsystem (30) speist, zum Beispiel ein Heiz- und/oder Enteisungssystem eines Raums eines Fahrzeugs, insbesondere, wenn der Verbrennungsmotor läuft.

9. Einheit nach einem der vorhergehenden Ansprüche, wobei der Zusatzelektromotor (16) einen vierpoligen Rotor aufweist.

10. Einheit nach dem vorhergehenden Anspruch, wobei der oder die Elektromotoren (8,9) je zum Antrieb eines Gebläses dienen und Kondensator- (8) und/oder Verdampfer-Motoren (9) sind.

11. Einheit nach einem der vorhergehenden Ansprüche, wobei einer oder mindestens einer der Elektromotoren (8) zu einem Kondensator gehört, wobei der Motor einen vierpoligen Rotor aufweist.

12. Einheit nach einem der vorhergehenden Ansprüche, wobei einer oder mindestens einer der Elektromotoren (9) zu einem Verdampfer gehört.

13. Betriebsverfahren einer Einheit nach einem der vorhergehenden Ansprüche, wobei entweder (i) der Verdichter und der Generator vom Verbrennungsmotor angetrieben werden, insbesondere, wenn ein die Einheit tragendes Fahrzeug auf der Straße ist, wobei der Generator dann den Elektromotoren der Kondensatoren und/oder Verdampfer Strom liefern kann, oder (ii) der Verdichter vom Zusatzelektromotor angetrieben wird, insbesondere, wenn ein die Einheit tragendes Fahrzeug steht, wobei die Motoren von Kondensatoren und Verdampfern dann von einem externen Stromnetz oder vom Generator gespeist werden können, wobei der Generator ebenfalls vom Zusatzelektromotor angetrieben werden kann.

## Claims

1. Assembly (1) comprising a generator and electric motors, for a vehicle air-conditioning or cooling system, comprising:
- a compressor (15) intended to be driven by a combustion engine (3),
- an auxiliary electric motor (16) for driving the compressor (15) when the latter is not or cannot be driven by the combustion engine,
- a generator (4) with permanent magnets having a shaft (25) which can be driven in rotation by the combustion engine (3),
- one or more electric motors (8, 9) for condensers and/or evaporators of a vehicle air-conditioning or cooling system, the generator directly powering the electric motor or motors (8, 9), the supply voltage of the electric motor or motors being the generator output voltage,
- a switching device (10) for the power supply of the electric motor or motors (8, 9) for condensers and/or evaporators of the air-conditioning or cooling system, allowing switching from a supply by the generator (4) to a supply by an external electrical network (11), the switching device (10) comprising one or more switches (12) allowing the supply of the electric motor or motors to be controlled from the electrical network,
**characterized in that** the generator (4) and the auxiliary electric motor (16) are arranged on this shaft (25).

2. Assembly according to the preceding claim, the combustion engine (3) and the electric motor or motors (8, 9) belonging to a vehicle cooling or air-conditioning system.

3. Assembly according to either one of the preceding claims, wherein the generator (4) and the auxiliary electric motor (16) are contained in a common housing (27).

4. Assembly according to any one of the preceding claims, wherein the switching device (10) is configured so that, when the combustion engine is stopped, the electric motors (8, 9) for the condenser and/or the evaporator are supplied from the external electrical network (11).

5. Assembly according to any one of the preceding claims, wherein the switching device (10) is configured so that, when the combustion engine is stopped, the electric motors (8, 9) for the condenser and/or evaporator are powered directly by the generator, and the compressor is driven by the auxiliary electric motor (16).

6. Assembly according to any one of the preceding claims, wherein the switching device (10) is configured so that, when the combustion engine is stopped, the auxiliary electric motor powers both the compressor and the generator, which powers the electric motor or motors (8, 9).

7. Assembly according to any one of the preceding claims, wherein the compressor (15) has a mechanical drive, in particular with pistons.

8. Assembly according to any one of the preceding claims, wherein the auxiliary electric motor powers an auxiliary heating system (30), for example a system for heating and/or de-icing a compartment of a vehicle, in particular when the combustion engine is in operation.

9. Assembly according to any one of the preceding claims, wherein the auxiliary electric motor (16) comprises a four-pole rotor.

10. Assembly according to the preceding claim, wherein the electric motor or motors (8, 9) each serve to drive a fan and are a condenser motor (8) and/or an evaporator motor (9).

11. Assembly according to any one of the preceding claims, wherein one or at least one of the electric motors (8) belongs to a condenser, said motor comprising a four-pole rotor.

12. Assembly according to any one of the preceding claims, wherein one or at least one of the electric motors (9) belongs to an evaporator.

13. Method for operating an assembly according to any one of the preceding claims, wherein either (i) the compressor and the generator are driven by the combustion engine, in particular when a vehicle bearing the assembly is on the road, the generator then being able to supply electricity to the electric motors for the condensers and/or evaporators, or (ii) the compressor is driven by the auxiliary electric motor, in particular when a vehicle bearing the assembly is stopped, the motors for condensers and evaporators then being able to be powered by an external electrical network or by the generator, the generator also being able to be driven by the auxiliary electric motor.
